# EUROPÄISCHE PATENTANMELDUNG

(11) **EP 3 202 619 A1**
(43) Veröffentlichungstag der Anmeldung: **09.08.2017**
(21) Anmeldenummer: 17154238.4
(22) Anmeldetag: 01.02.2017
(51) Int. Cl.: B60P 7/08

(54) **NETZSYSTEM ZUR SICHERUNG VON LADUNG AUF LADEFLÄCHEN UND IN LADERÄUMEN**

(30) Priorität: 02.02.2016 DE 102016101798
(71) Anmelder: Steinfeld, Philipp, 14476 Potsdam (DE)
(72) Erfinder: Steinfeld, Philipp, 14476 Potsdam (DE)
(74) Vertreter: Gulde & Partner

(57) **Zusammenfassung**

Die Erfindung beschreibt ein Netzsystem zur Sicherung von Ladung auf Ladeflächen und in Laderäumen, mit winklig zueinander verlaufenden, sich kreuzenden und miteinander verbundenen Längsgurtbändern (1a) und Quergurtbändern (1 b) und ist dadurch gekennzeichnet, dass ausgewählte Längsgurtbänder (1c) und Quergurtbänder (1 d) an ihren Enden (2) Spannvorrichtungen (3) aufweisen, welche mit Losenden (5) auswechselbarer Adaptergurte (4a, 4b) zusammenwirken.

## Beschreibung

Die Erfindung beschreibt ein Netzsystem zur Ladungssicherung und dient zur Sicherung von Ladung auf Ladeflächen und in Laderäumen, wie sie in Transportmitteln, beispielsweise Lastkraftwagen, Flugzeugen oder Güterwagen, vorhanden sind.

Derartige Netzsysteme werden üblicherweise zur Ladungssicherung von verschiedensten Transportgütern verwendet. Durch das Netz wird dabei die Ladung in Längs- und/oder Querrichtung umgeben, um zu verhindern, dass sich die Ladung unkontrolliert bewegt.

Die DE 1290878 B beschreibt ein System zur Lastverzurrung durch netzartig verlaufende Spanngurte. Die Spanngurte verlaufen hierbei sich kreuzend in Fahrzeuglängsrichtung und in Fahrzeugquerrichtung. Die einzelnen Spanngurte weisen hierbei unterschiedliche Federkonstanten auf.

Aus der DE 202012101216 U1 ist ein flächiges Sicherungsmittel mit wenigstens zwei in zumindest einem Kreuzungspunkt miteinander verbundenen Gurtbändern, die jeweils als gewebte oder gewirkte Bänder aus Kunststofffäden ausgebildet sind, bekannt. Die sich kreuzenden Gurtbänder sind im Kreuzungspunkt durch ineinandergreifende, jeweils gurteigenen Kunststofffäden miteinander gekoppelt.

Der Erfindung liegt die Aufgabe zugrunde, ein Netzsystem zur Sicherung von Ladung auf Ladeflächen und in Laderäumen zu schaffen, welches einfach und preiswert herstellbar, effektiv zu handhaben und universell einsetzbar ist.

Diese Aufgabe wird gelöst durch die Merkmale im Anspruch 1. Zweckmäßige Ausgestaltungen der Erfindung sind in den Unteransprüchen enthalten.

Ein besonderer Vorteil der Erfindung besteht in der universellen Einsetzbarkeit des erfindungsgemäßen Netzsystems, welche darauf basiert, dass zur Sicherung von Ladung auf Ladeflächen und in Laderäumen winklig zueinander verlaufende, sich kreuzende und miteinander verbundene Längsgurtbänder und Quergurtbänder angeordnet sind, wobei ausgewählte Längsgurtbänder und Quergurtbänder an ihren Enden Spannvorrichtungen aufweisen, welche mit Losenden auswechselbarer Adaptergurte zusammenwirken. Durch die Austauschbarkeit der Adaptergurte wird es möglich, das Netzsystem an verschiedenste Befestigungssysteme anzupassen. Die Adaptergurte weisen hierfür den Losenden gegenüberliegend Endbeschläge auf, welche beispielsweise als Haken oder als Airlineschienen-Rastelemente ausgebildet sein können. Die Spannvorrichtungen und/oder die Endbeschläge sind über Schlaufen mit den Gurtbändern verbunden. Das Netzsystem besteht aus miteinander verbindbaren Netzmodulen, wobei in der Praxis häufig zwei Netzmodule oder vier Netzmodule miteinander verbunden werden. Mit einem Netzsystem aus vier Netzmodulen ist eine umfassende Ladungssicherung in senkrechter und waagerechter Richtung möglich. Netzsysteme mit zwei Netzmodulen werden häufig zur senkrechten Fixierung der Ladung verwendet.
Eine besonders hohe Stabilität erreicht das Netzsystem dadurch, dass die Längsgurtbänder und die Quergurtbänder an den Kreuzungspunkten oder an den Eckpunkten miteinander verbunden sind. Diese Verbindung ist sowohl als Nähverbindung als auch als Klebeverbindung oder bei Gurtbändern aus Kunststoff als Schweißverbindung möglich. Die einzelnen Gurtbänder sind rechtwinklig zueinander angeordnet und können farbig gestaltet sein. Zur Anpassung des Netzsystems an das Befestigungssystem der Ladeflächen und Laderäume werden austauschbare Adaptergurte verwendet.

Die Erfindung soll nachstehend anhand von zumindest teilweise in den Ausführungsbeispielen dargestellten Ausführungsvarianten näher erläutert werden.

Es zeigen:
- Figur 1: ein erfindungsgemäßes Netzsystem aus zwei Netzmodulen mit auswechselbaren Adaptergurten,
- Figur 2: eine Eckverbindung zwischen zwei Gurtbändern,
- Figur 3: eine Kreuzungsverbindung zwischen zwei Gurtbändern,
- Figur 4: eine Kreuzungsverbindung mit Schlaufe,
- Figur 5: einen Adaptergurt mit Haken,
- Figur 6: einen Adaptergurt mit Airlineschinen-Rastelement und
- Figur 7: ein Netzsystem aus vier Netzmodulen.

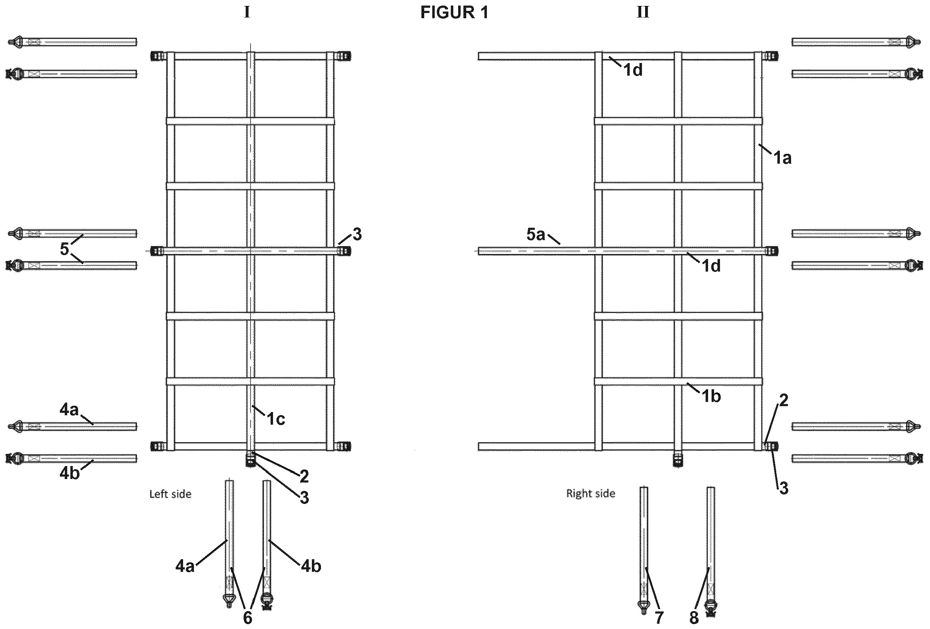

Wie aus Figur 1 zu ersehen ist, weisen die zwei Netzmodule I und II jeweils winklig zueinander verlaufende, sich kreuzende und miteinander verbundene Längsgurtbänder 1a und Quergurtbänder 1b auf. Ausgewählte Längsgurtbänder 1c und Quergurtbänder 1d weisen an ihren Enden 2 Spannvorrichtungen 3 auf. Diese Spannvorrichtungen 3 sind derart gestaltet, dass sie mit den Losenden 5 auswechselbarer Adaptergurte 4a und 4b zusammenwirken und so eine Verspannung des Netzsystems ermöglichen. Dadurch, dass die Adaptergurte 4a, 4b auswechselbar sind und beispielsweise unterschiedliche Endbeschläge 6 aufweisen, kann das Netzsystem an die verschiedensten Befestigungssysteme angepasst werden. Im vorliegenden Ausführungsbeispiel können die Adaptergurte 4a an ihren, den Losenden 5 entgegengesetztem Ende Haken 7 und die Adaptergurte 4b Airlineschienen-Rastelemente 8 aufweisen. Die Installation des erfindungsgemäßen Netzsystems erfolgt also einmal dadurch, dass die beiden Netzmodule I und II über Spannvorrichtungen 3 und Losenden 5a verbunden werden. Weiterhin werden nun die Außenseiten des Netzsystems über die Adaptergurte 4a, 4b mit dem Befestigungssystem der Ladeflächen bzw. der Laderäume verbunden.

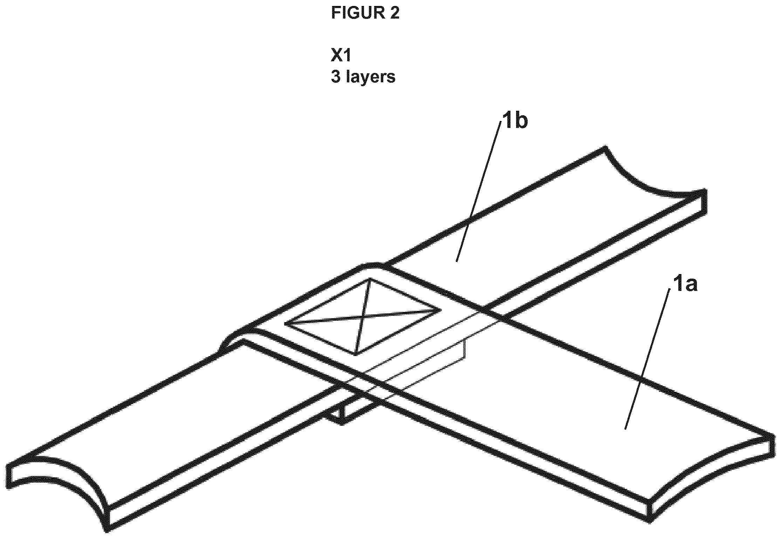

Die Figur 2 zeigt eine Eckverbindung zwischen einem Längsgurtband 1a und einem Quergurtband 1 b. Der Eckpunkt x1 ist hierbei als eine Nähverbindung ausgebildet. Dadurch, dass das Längsgurtband 1a um das Quergurtband 1b herumgelegt ist, wird eine dreilagige Verbindung realisiert.

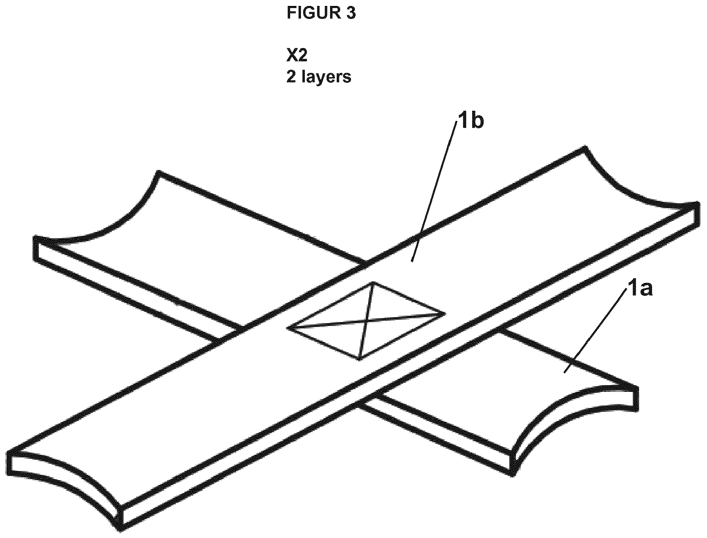

In Figur 3 ist eine Kreuzverbindung zwischen einem Längsgurtband 1a und einem Quergurtband 1 b dargestellt. Der Kreuzungspunkt x2 der beiden Gurtbänder 1a, 1 b ist hierbei als zweilagige Verbindung realisiert.

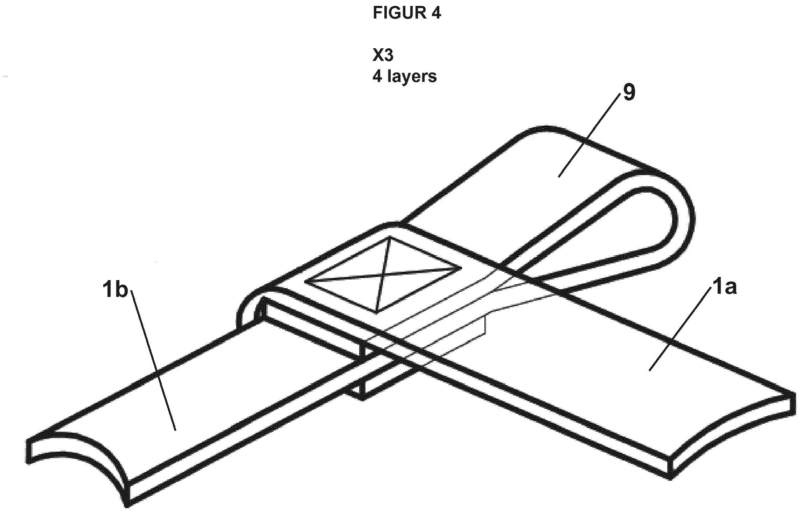

In Figur 4 ist eine Eckverbindung dargestellt, wobei hier das Quergurtband 1 b über den Eckpunkt x3 hinausgeführt, umgeschlagen und eine Schlaufe 9 bildend mit dem ebenfalls umgeschlagenen Ende des Längsgurtbandes 1a verbunden ist. Resultierend wird hier also eine Nähverbindung aus vier Lagen realisiert.

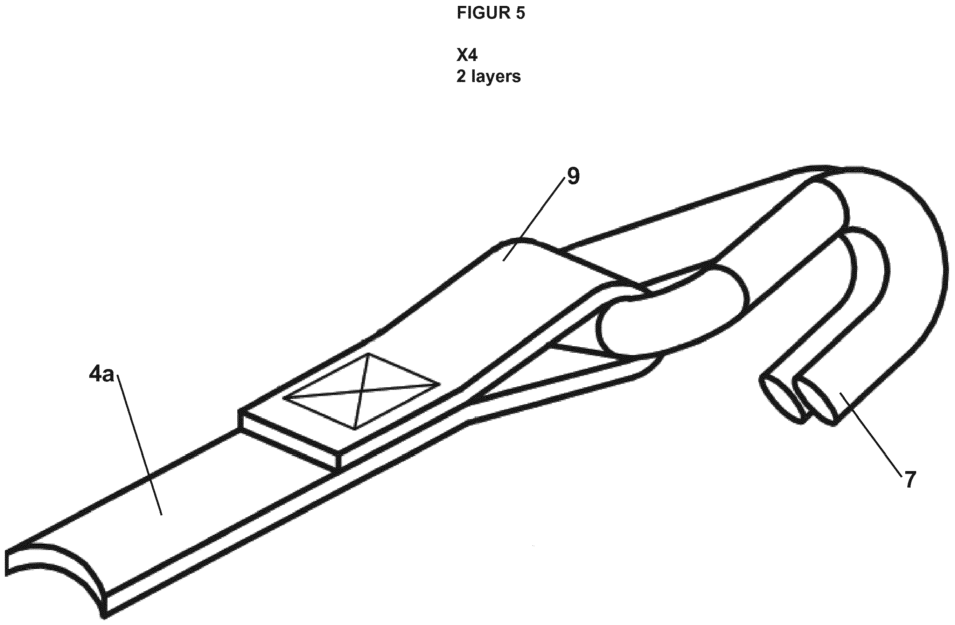

Figur 5 zeigt einen Adaptergurt 4a mit einem Haken 7, welcher in eine Schlaufe 9 eingebunden ist.

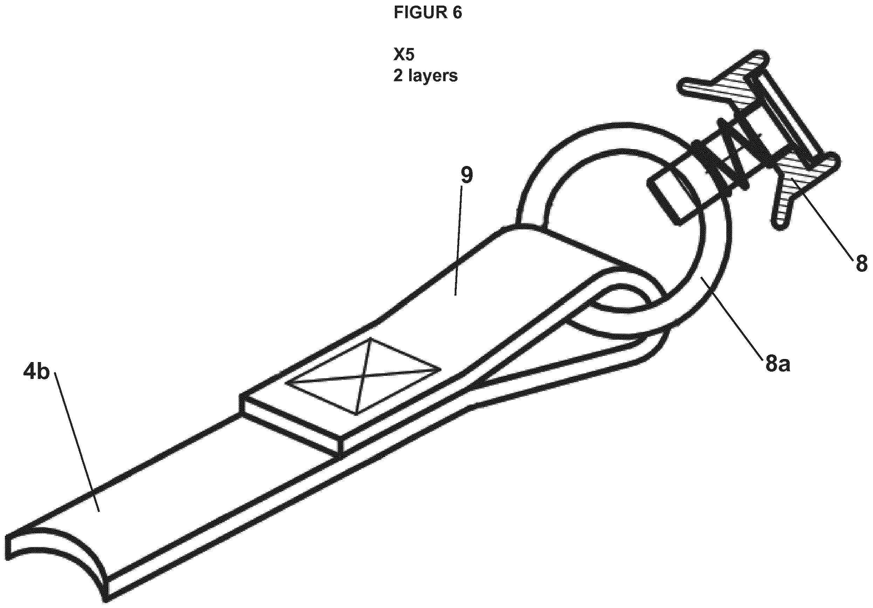

In Figur 6 schließlich ist ein Adaptergurt 4b dargestellt, bei welchem in eine Schlaufe 9 ein Airlineschienen-Rastelement 8 eingebunden ist über einen Verbindungsring 8a.

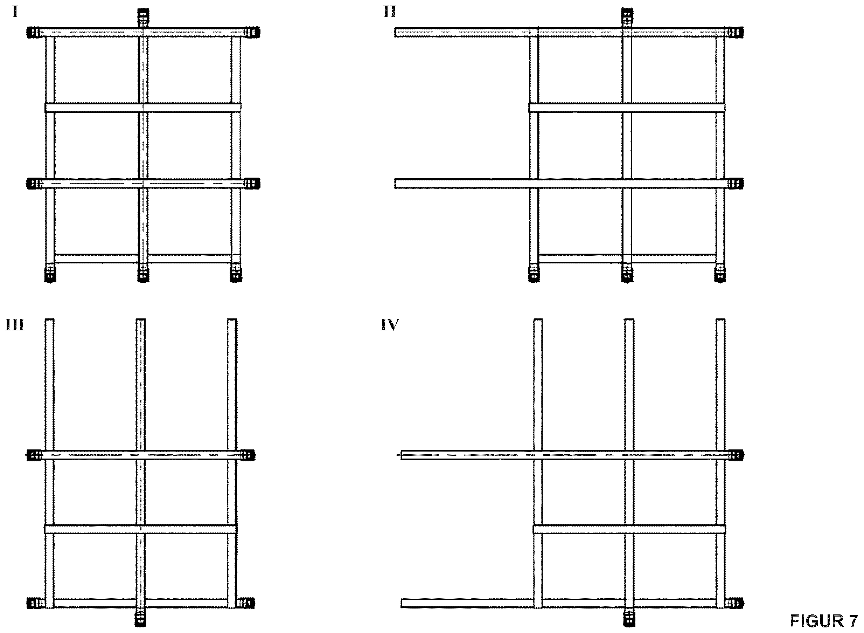

In Figur 7 ist ein Netzsystem dargestellt, welches aus vier einzelnen Netzmodulen I, II, III und IV besteht. Die einzelnen Netzmodule I bis IV untereinander sind wiederum über Spannvorrichtungen 3 und Losenden 5a miteinander verbunden, die Befestigung an der Ladefläche bzw. den Wänden des Laderaumes erfolgt über die Adaptergurte 4a, 4b.

Die Erfindung ist nicht beschränkt auf die hier beschriebenen Ausführungsbeispiele. Vielmehr ist es möglich, durch Variation der einzelnen Mittel und Merkmale weitere Ausführungsvarianten zu realisieren, ohne den Rahmen der Erfindung zu verlassen.

### Bezugszeichenliste

- 1a, 1c: Längsgurtband
- 1b. 1d: Quergurtband
- 2: Ende der Bänder
- 3: Spannvorrichtung
- 4a, 4b: Adaptergurte
- 5, 5a: Losende
- 6: Endbeschlag
- 7: Haken
- 8: Airlineschienen-Rastelement
- 9: Schlaufe

- I, II, III, IV: Netzmodul
- x1, x3: Eckpunkt
- x2: Kreuzungspunkt

## Patentansprüche

1. Netzsystem zur Sicherung von Ladung auf Ladeflächen und in Laderäumen mit winklig zueinander verlaufenden, sich kreuzenden und miteinander verbundenen Längsgurtbändern (1a) und Quergurtbändern (1b),
**dadurch gekennzeichnet, dass**
ausgewählte Längsgurtbänder (1 c) und Quergurtbänder (1 d) an ihren Enden (2) Spannvorrichtungen (3) aufweisen, welche mit Losenden (5) auswechselbarer Adaptergurte (4a, 4b) zusammenwirken.

2. Netzsystem nach Anspruch 1, **dadurch gekennzeichnet, dass** die Adaptergurte (4a, 4b) den Losenden (5) gegenüber Endbeschläge (6) aufweisen.

3. Netzsystem nach Anspruch 2, **dadurch gekennzeichnet, dass** die Endbeschläge (6) Haken (7) oder Airlineschienen-Rastelemente (8) sind.

4. Netzsystem nach einem der voranstehenden Ansprüche, **dadurch gekennzeichnet, dass** die Spannvorrichtungen (3) und/oder die Endbeschläge (6) über Schlaufen (9) mit den Gurtbändern (1 a, 1b, 1c, 1d sowie den Adaptergurten 4a, 4b) verbunden sind.

5. Netzsystem nach einem der voranstehenden Ansprüche, **dadurch gekennzeichnet, dass** das Netzsystem miteinander verbindbarer Netzmodule (I, II, III, IV) aufweist.

6. Netzsystem nach Anspruch 5, **dadurch gekennzeichnet, dass** das Netzsystem zwei Netzmodule (I, II) oder vier Netzmodule (I, II, III, IV) aufweist.

7. Netzsystem nach einem der voranstehenden Ansprüche, **dadurch gekennzeichnet, dass** die Längsgurtbänder (1 a, 1 c) und die Quergurtbänder (1 b, 1 d) an Kreuzungspunkten (x2) oder Eckpunkten (x1, x3) miteinander verbunden sind.

8. Netzsystem nach Anspruch 7, **dadurch gekennzeichnet, dass** die Verbindung zwischen den Längsgurtbändern (1 a, 1 c) und den Quergurtbändern (1 b, 1 d) eine Nähverbindung oder eine Klebeverbindung oder eine Schweißverbindung ist.

9. Netzsystem nach einem der voranstehenden Ansprüche, **dadurch gekennzeichnet, dass** die einzelnen Gurtbänder (1a, 1 b, 1 c, 1 d) rechtwinklig zueinander angeordnet sind.

10. Netzsystem nach einem der voranstehenden Ansprüche, **dadurch gekennzeichnet, dass** die Gurtbänder (1 a, 1 b, 1 c, 1 d und/oder die Adaptergurte 4a, 4b) farbig ausgebildet sind.

11. Verfahren zur Sicherung von Ladung auf Ladeflächen und in Laderäumen mittels eines Netzsystems gemäß Anspruch 1,
**dadurch gekennzeichnet, dass**
zur Anpassung des Netzsystems an das Befestigungssystem der Ladeflächen und Laderäume austauschbarer Adaptergurte verwendet werden.
